# EUROPEAN PATENT APPLICATION

(11) **EP 4 391 221 A1**
(43) Date of publication of application: **26.06.2024**
(21) Application number: 23215004.5
(22) Date of filing: 07.12.2023
(51) Int. Cl.: H01Q 1/27, H01Q 9/30, H01Q 9/28, H01Q 7/00, H01Q 5/307

(54) **ELECTRONIC DEVICE FRAME ANTENNAS**

(30) Priority: 20.12.2022 US 202263476371 P; 09.11.2023 US 202318505715
(71) Applicant: Apple Inc., Cupertino CA 95014 (US)
(72) Inventor: NIAKAN, Nahal, Santa Clara (US)
(74) Representative: Froud, Christopher Andrew

(57) **Abstract**

A head-mounted device (10) may include displays (18) that display images to a user while worn. The device (10) may include a conductive frame (58) having a front portion (12-2) and temple portions (12-1). Waveguides (32) may be mounted to the front portion (12-2) for directing image light to eye boxes. Projectors (28) that emit the image light may be coupled to the temple portions (12-1). The frame (58) may include gaps (60) that divide the frame into segments. Two or more of the segments may be fed radio-frequency signals to form one or more antennas (38) in the temple portions (12-1), the front portion (12-2), or between the temple portions and front portion and/or to form isolation elements. A conductive ring (68) may be disposed between the waveguide (32) and a transparent layer and may extend along a lateral periphery of the waveguide (32) to form one or more conductors for one or more antennas and/or isolation elements between two or more antennas.

## Description

This application claims priority to U.S. patent application No. 18/505,715, filed November 9, 2023, and U.S. Provisional Patent Application No. 63/476,371, filed December 20, 2022.

### Field

This relates generally to electronic devices, including head-mounted electronic devices with wireless communications capabilities.

### Background

Electronic devices having displays are used to display images to users. Such electronic devices can include head-mounted electronic devices. It can be challenging to incorporate wireless communications capabilities into head-mounted electronic devices.

### Summary

A head-mounted device such as a pair of glasses may have left and right displays. The displays may present images to eye boxes. The glasses may have a conductive frame. The conductive frame may include a front portion and temple portions extending from opposing ends of the front portion. Lenses may be mounted to the front portion. The lenses may include waveguides. Projectors may be mounted to the temple portions. The projectors may emit images in light and may provide the light to the waveguides. The waveguides may direct the light to the eye boxes.

The conductive frame may include gaps that divide the conductive frames into segments. Two or more of the segments may be fed using radio-frequency transmission line structures or other feed structures to form one or more antennas from the conductive frame. The antennas may be located in the front portion, in the temple portions, or may extend across both a temple portion and the front portion of the conductive frame.

Transparent layers may be mounted to the front portion overlapping the waveguides. The waveguides may be interposed between the transparent layers. A conductive ring may be mounted to the front portion and may extend along the lateral periphery of the waveguide between the waveguide and one of the transparent layers. One or more gaps may be disposed in the conductive ring. The conductive ring may be fed at one or more of the gaps to form one or more antenna resonating elements for one or more antennas.

### Brief Description of the Drawings

FIG. 1 is a schematic diagram of components in an illustrative electronic device in accordance with some embodiments.
FIG. 2 is a top view of an illustrative electronic device having left and right displays in accordance with some embodiments.
FIG. 3 is a diagram of illustrative wireless circuitry in an electronic device in accordance with some embodiments.
FIG. 4 is a diagram of an illustrative monopole antenna in accordance with some embodiments.
FIG. 5 is a diagram of an illustrative dipole antenna in accordance with some embodiments.
FIG. 6 is a rear perspective view of an illustrative electronic device having multiple conductive frame segments that may be used to form one or more antennas in accordance with some embodiments.
FIG. 7 is a cross-sectional side view showing how a conductive ring may be integrated into a waveguide-based optical stack for a display in an electronic device in accordance with some embodiments.
FIGS. 8 and 9 are front views showing how an illustrative conductive ring in a waveguide-based optical stack for a display may be used to form an antenna in accordance with some embodiments.
FIG. 10 is a plot of antenna performance (antenna efficiency) as a function of frequency for an electronic device of the types shown in FIGS. 1-9 in accordance with some embodiments.

### Detailed Description

Head-mounted devices include head-mounted housing structures that allow the devices to be worn on the heads of users. A head-mounted device may have displays that display images to the user while the head-mounted device is being worn. In some configurations, waveguide systems may be used to route images from displays to eye boxes for viewing. The waveguide systems may have transparent lenses that allow a user to view real-world objects as well as computer-generated content from the displays. To support wireless communications, the head-mounted device may have antennas. The antennas may be integrated into a conductive frame in the housing structures and/or a conductive ring overlapping the waveguide.

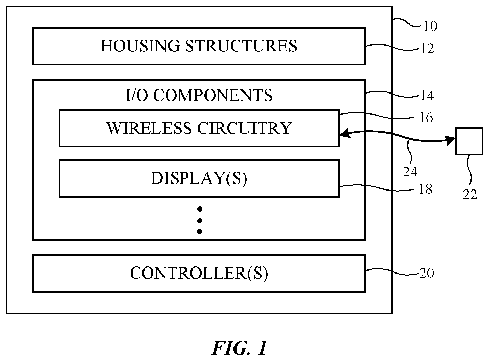

FIG. 1 shows an illustrative electronic device 10. Device 10 may be operated in a system that includes one or more external devices such as external device 22. In some implementations that are described herein as an example, device 10 may include a head-mounted device (sometimes referred to herein as a head-mounted display device or simply a head-mounted display). If desired, device 10 may include a portable electronic device such as a laptop computer, a tablet computer, a media player, a cellular telephone, or a wearable electronic device such as a wristwatch, a pendant or bracelet, headphones, an earpiece, a headset, or other small portable device. Device 10 may also be larger device such as a desktop computer, display with or without an integrated computer, a set-top box, or a wireless access point or base station. If desired, device 10 may be integrated into a larger device or system such as a piece of furniture, a kiosk, a building, or a vehicle.

As shown in FIG. 1, device 10 may include a housing formed from one or more housing structures 12 (sometimes referred to herein as housing members 12). In implementations where device 10 is a head-mounted device, housing structures 12 may include support structures that are mountable or wearable on a user's head (sometimes referred to herein as head-mounted support structures), thereby allowing a user to wear device 10 while using or operating device 10.

The head-mounted support structures in housing structures 12 may have the shape of glasses or goggles and may support one or more lenses that align with one or more of the user's eyes while the user is wearing device 10. The lenses may include one or more waveguides that are used to direct image light towards the user's eyes. The head-mounted support structures in housing structures 12 may include a rigid frame that helps to provide mechanical integrity, rigidity, and/or strength to device 10 during use. In some implementations that are described herein as an example, the rigid frame is formed from conductive material (e.g., metal such as aluminum or stainless steel). The rigid frame may therefore sometimes be referred to herein as a conductive frame.

If desired, housing structures 12 may include other housing structures or housing members disposed on (e.g., layered on or over, affixed to, etc.) and/or overlapping some or all of the conductive frame (e.g., dielectric structures, rubber structures, ceramic structures, glass structures, fiber composite structures, foam structures, sapphire structures, plastic structures, cosmetic structures, etc.). These other housing structures may, for example, support one or more components in device 10, may help to protect the components of device 10 from damage or contaminants, may help to allow device 10 to be worn comfortably on the user's head, may help to hide portions of the conductive frame from view, may contribute to the cosmetic or aesthetic appearance of device 10, etc.

Device 10 may include input/output (I/O) components such as I/O components 14. I/O components 14 may allow device 10 to provide output and/or other information to the user of device 10 or other entities and/or may allow device 10 to receive user input and/or other information from the user and/or other entities. I/O components 14 may include one or more displays such as displays 18. Displays 18 may emit light (sometimes referred to herein as image light) that is provided to the user's eyes for viewing. The light may contain images. The images may contain pixels. Many images may be provided over time in a sequence (e.g., as a video). The displays 18 in device 10 may include, for example, left and right displays. The left display may provide light to a user's left eye whereas the right display may provide light to the suer's right eye while the user wears device 10 on their head.

I/O components 14 may also include wireless circuitry such as wireless circuitry 16 (sometimes referred to herein as wireless communication circuitry 16). Wireless circuitry 16 may transmit radio-frequency signals 24 to external equipment 22 and/or may receive radio-frequency signals 24 from external equipment 22. External equipment 22 may include another device such as device 10 (e.g., another head-mounted device, a desktop computer, a laptop computer, a cellular telephone, a tablet computer, a tethered computer, etc.), a peripheral device or accessory device (e.g., a user input device, a stylus, a device that identifies user inputs associated with gestures or motions made by a user, a gaming controller, headphones, etc.), remote computing equipment such as a remote server or cloud computing segment, a wireless base station, a wireless access point, and/or any other desired equipment with wireless communications capabilities.

I/O components 14 may also include other components (not shown) such as sensors, haptic output devices (e.g., one or more vibrators), non-display light sources such as light-emitting diodes, audio devices such as speakers for producing audio output, wireless charging circuitry for receiving wireless power for charging a battery on device 10 and/or for transmitting wireless power for charging a battery on other devices, batteries and/or other energy storage devices, buttons, mechanical adjustment components (e.g., components for adjusting one or more housing structures 12 to allow device 10 to be worn comfortably on a user's head and/or on other user's heads, which may have different geometries), and/or other components.

Sensors in I/O components 14 may include image sensors (e.g., one or more visible and/or infrared light cameras, binocular three-dimensional image sensors that gather three-dimensional images using two or more cameras in a binocular configuration, sensors that emit beams of light and that use two-dimensional image sensors to gather image data for three-dimensional images from light spots that are produced when a target is illuminated by the beams, light detection and ranging (lidar) sensors, etc.), acoustic sensors such as microphones or ultrasonic sensors, gaze tracking sensors (e.g., an optical system that emits one or more beams of infrared light that are tracked using the image sensor after reflecting from a user's eyes while wearing device 10), touch sensors, force sensors (e.g., capacitive force sensors, strain gauges, resistive force sensors, etc.), proximity sensors (e.g., capacitive proximity sensors and/or optical proximity sensors), ambient light sensors, contact sensors, pressure sensors, moisture sensors, gas sensors, magnetic sensors, motion sensors for sensing motion, position, and/or orientation (e.g., gyroscopes, accelerometers, compasses, and/or inertial measurement units (IMUs) that include two or more of these), and/or any other desired sensors.

Device 10 may also include one or more controllers 20 (sometimes referred to herein as control circuitry 20). Controller(s) 20 may include processing circuitry and storage circuitry. The processing circuitry may be used to control the operation of device 10 and may include one or more processors such as microprocessors, digital signal processors, microcontrollers, host processors, application specific integrated circuits, baseband processors, graphics processing units, central processing units (CPUs), etc. The storage in controller(s) 20 may include one or more hard disks or hard drives storage, nonvolatile memory (e.g., electrically-programmable-read-only memory configured to form a solid-state drive), volatile memory (e.g., static or dynamic random-access-memory), etc. If desired, controller(s) 20 may be configured to perform operations in device 10 using hardware (e.g., dedicated hardware or circuitry), firmware, and/or software. Software code for performing operations in device 10 may be stored on storage and may be executed by processing circuitry in controller(s) 20.

Controller(s) 20 run software on device 10 such as one or more software applications, internet browsers, gaming programs, voice-over-internet-protocol (VOIP) telephone call applications, social media applications, driving or navigation applications, email applications, media playback applications, operating system functions, etc. To support interactions with external equipment 22, controller(s) 20 may implement one or more communications protocols associated with (wireless) radio-frequency signals 24. The communications protocols may include internet protocols, wireless local area network protocols (e.g., IEEE 802.11 protocols - sometimes referred to as Wi-Fi^{®}), protocols for other short-range wireless communications links such as the Bluetooth^{®} protocol or other wireless personal area network (WPAN) protocols, IEEE 802.1 1ad protocols, cellular telephone protocols, multiple-input and multiple-output (MIMO) protocols, antenna diversity protocols, satellite navigation system protocols, IEEE 802.15.4 ultra-wideband communications protocols or other ultra-wideband communications protocols, etc.

During operation, wireless circuitry 16 may be used to support communication between device 10 and external equipment 22 (e.g., using radio-frequency signals 24). For example, device 10 and/or external device 22 may transmit video data, audio data, user input commands, and/or other data to each other (e.g., in one or both directions). If desired, device 10 and/or external equipment 22 may use wired and/or wireless communications circuitry to communicate through one or more communications networks (e.g., the internet, local area networks, etc.). If desired, device 10 may communicate with other end hosts over the internet via radio-frequency signals 24 and external equipment 22. Wireless circuitry 16 may allow data to be received by device 10 from external equipment 22 and/or to provide data to external equipment 22.

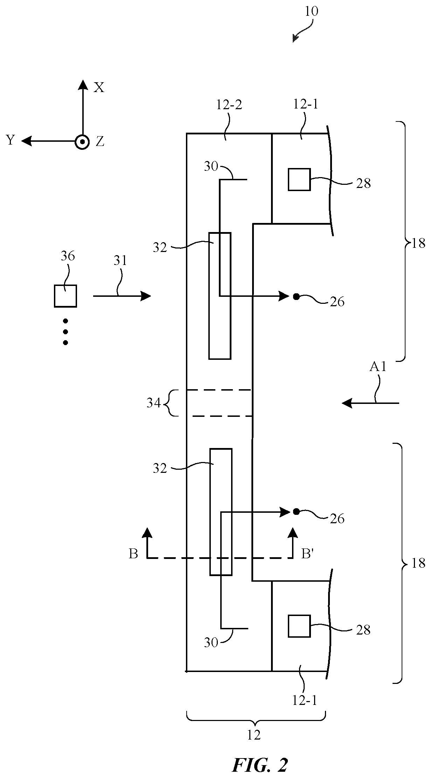

FIG. 2 is a top view showing how device 10 may include two displays 18 integrated into housing structures 12 (e.g., for displaying images to a user's left and right eyes respectively). As shown in FIG. 2, housing structures 12 may include housing structures 12-1 that are coupled to opposing ends of second housing structure 12-2. Housing structure 12-2 may form housing walls and other structures at the front of device 10 (e.g., a front-facing or world-facing side of device 10 while device 10 is being worn by a user). Housing structure 12-2 may sometimes be referred to herein as front housing 12-2, front support member 12-2, front frame member 12-2, glasses frame 12-2, or lens frame 12-2.

Housing structures 12-1 may include elongated structures that extend along the sides of a user's face. Portions of housing structures 12-1 may rest on the user's ears while the user wears device 10, for example. Housing structures 12-1 may sometimes be referred to herein as temples 12-1 or arms 12-1. Housing structures 12 may include a left temple 12-1 (shown at the bottom of the page in FIG. 2) and a right temple 12-1 (shown at the top of the page in FIG. 2). If desired, hinges or elastic attachment structures may be used to attach temples 12-1 to front housing 12-2 (e.g., at left and right edges of front housing 12-2). This may allow temples 12-1 to bend outward to accommodate the size of the user's head while wearing device 10 and/or may allow temples 12-1 to be folded inwards when device 10 is not being worn by the user.

Front housing 12-2 may span the width of the user's face while the user is wearing device 10. When wearing device 10, the user's left eye is located at or overlapping a left eye box (surrounding the lowermost point 26 shown in FIG. 2) and the user's right eye is located at or overlapping a right eye box (surrounding the uppermost point 26 shown in FIG. 2). Device 10 may include a first (left) display 18 overlapping the left eye box a second (right) display 18 overlapping the right eye box. Front housing 12-2 may include a nose bridge portion 34 that couples the left and right halves of device 10 (e.g., the left and right displays 18) together. Nose bridge portion 34 may rest on or may otherwise be supported by the nose of the user. If desired, nose bridge portion 34 may include nose pads.

When device 10 is worn by the user, displays 18 may produce computer-generated images that are viewed by the user at the left and right eye boxes. The left display 18 on the left side of device 10 (e.g., at the bottom of the page in FIG. 2) may provide a left image to the left eye box whereas the right display 18 on the right side of device 10 (e.g., at the top of the page in FIG. 2) may provide a right image to the right eye box. Device 10 may include transparent left and right lenses (e.g., having lateral surfaces lying parallel to the X-Z plane) in front of the eye boxes (points 26). Each lens may include a corresponding optical waveguide 32. Each waveguide 32 may form an optical combiner that combines (e.g., overlays) computer-generated images (e.g., virtual images) in image light 30 produced by displays 18 with real-world light 31 (sometimes referred to herein as world light 31 or external light 31) that has been emitted or reflected off of real world (external) objects 36 present in the scene in front of device 10. Image light 30 may include virtual objects generated by displays 18 that are overlaid by displays 18 with real world objects (e.g., external objects 36) when viewed at the eye boxes.

Each display 18 may include one or more corresponding projectors 28. Device 10 may, for example, include at least a left projector 28 mounted at or within the left temple 12-1 and a right projector 28 mounted at or within the right temple 12-1. Each projector 28 may generate and emit image light 30 (e.g., towards the corresponding waveguide 32). Each waveguide 32 may include an input coupler (not shown) that couples image light 30 into the waveguide (e.g., at the left or right edge of front housing 12-2). Waveguides 32 may then laterally propagate image light 30 via total internal reflection (TIR) towards nose bridge portion 34 (e.g., towards a portion of waveguides 32 overlapping the eye boxes). Each waveguide 32 may include an output coupler (not shown) that couples image light 30 out of the waveguide and towards the eye boxes at points 26 (e.g., in the -Y direction). If desired, waveguides 32 may also include cross-couplers optically coupled between the input and output couplers for redirecting and expanding image light 30 by the time the image light reaches the output couplers.

The optical couplers on waveguides 32 (e.g., input couplers, output couplers, and/or cross-couplers) may include one or more lenses, optical wedges, optical prisms, partial reflectors, mirrors, diffractive gratings (e.g., surface relief gratings, volume holograms (phase gratings), diffractive metasurfaces, etc.), waveguide facets, and/or any other desired optical components for redirecting image light 30. Waveguides 32 may be supported and/or incorporated into transparent lenses (optical stacks) mounted to or within front housing 12-2 and held in front of the eye boxes by front housing 12-2. While propagating image light 30 towards the eye boxes, waveguides 32 and the output couplers on waveguides 32 may be transparent to and may transmit world light 31 towards the eye boxes.

Projectors 28 (sometimes referred to as display projectors, display modules, or display devices) may be emissive projectors (e.g., having arrays of light-emitting elements such as micro light-emitting diodes (uLEDs) that each emit light for a respective pixel of the images in image light 30), projectors having spatial light modulators, projectors having scanning mirrors, or projectors display components implemented using other display architectures. The spatial light modulators may include transmissive spatial light modulators (e.g., liquid crystal device (LCD) transmissive panels that are controlled using image data to modulate images onto illumination light transmitted through the panel, thereby forming image light 30) or reflective spatial light modulators (e.g., reflective panels that are controlled using image data to modulate illumination light reflected off the panel, thereby forming image light 30). Reflective spatial light modulators may include liquid-crystal-on-silicon (LCOS) panels, ferroelectric LCOS (fLCOS) panels, or digital micromirror device (DMDs) panels, as examples.

Displays 18 may be used to display visual content (images in image light 30) for the user of device 10. The content that is presented on displays 18 may include virtual objects and other content that is provided to projectors 28 by controller(s) 20 (FIG. 1). This virtual content may sometimes be referred to as computer-generated content. Computer-generated content may be displayed in the absence of real-world content (e.g., world light 31) or may be combined with world light 31 (e.g., in an augmented reality configuration in which real-world and virtual objects are simultaneously viewed by the user). In other implementations, real-world images may be captured by a camera (e.g., a front-facing camera) so that computer-generated content may be overlaid onto the real-world images captured by the camera (e.g., in a virtual reality or mixed reality configuration).

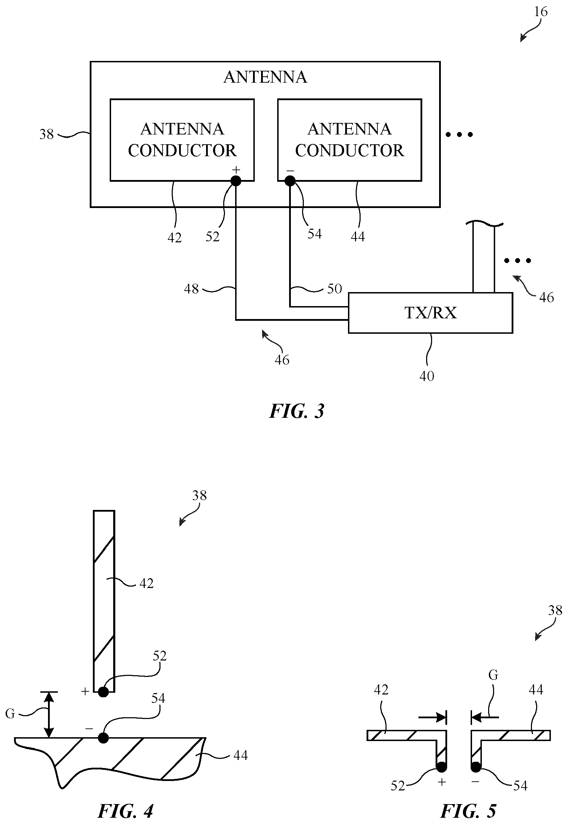

During operation, device 10 may use wireless circuitry 16 to receive image data to be used by projectors 28 in generating image light 30, to receive other information from external equipment 22, and/or to provide user input, sensor data, or other information to external equipment 22 (e.g., using radio-frequency signals 24 of FIG. 1). FIG. 3 is a diagram of illustrative components in wireless circuitry 16.

As shown in FIG. 3, wireless circuitry 16 may include one or more transceivers (e.g., transceiver circuitry) such as transceiver (TX/RX) 40. Transceiver 40 may handle transmission and/or reception of radio-frequency signals 24 within corresponding frequency bands at radio frequencies (sometimes referred to herein as communications bands or simply as bands). The frequency bands handled by transceiver 40 may include wireless personal area network (WPAN) frequency bands such as the 2.4 GHz Bluetooth^{®} band or other WPAN communications bands, cellular telephone communications bands such as a cellular low band (600-960 MHz), a cellular low-midband (1400-1550 MHz), a cellular midband (1700-2200 MHz), a cellular high band (2300-2700 MHz), a cellular ultra-high band (3300-5000 MHz), or other cellular communications bands between about 600 MHz and about 5000 MHz), 3G bands, 4G LTE bands, 3GPP 5G New Radio Frequency Range 1 (FR1) bands below 10 GHz, 3GPP 5GNew Radio (NR) Frequency Range 2 (FR2) bands between 20 and 60 GHz, other centimeter or millimeter wave frequency bands between 10-300 GHz, wireless local area network (WLAN) frequency bands (e.g., Wi-Fi^{®} (IEEE 802.11) or other WLAN communications bands) such as a 2.4 GHz WLAN band (e.g., from 2400 to 2480 MHz), a 5 GHz WLAN band (e.g., from 5180 to 5825 MHz), a Wi-Fi^{®} 6E band (e.g., from 5925-7125 MHz), and/or other Wi-Fi^{®} bands (e.g., from 1875-5160 MHz), near-field communications frequency bands (e.g., at 13.56 MHz), satellite navigation frequency bands such as the Global Positioning System (GPS) bands, Global Navigation Satellite System (GLONASS) bands, and BeiDou Navigation Satellite System (BDS) bands, ultra-wideband (UWB) frequency bands that operate under the IEEE 802.15.4 protocol and/or other ultra-wideband communications protocols (e.g., a first UWB communications band at 6.5 GHz and/or a second UWB communications band at 8.0 GHz), communications bands under the family of 3GPP wireless communications standards, communications bands under the IEEE 802.XX family of standards, satellite communications bands, unlicensed bands, emergency and/or public services bands, and/or any other desired frequency bands of interest. Transceiver 40 may also be used to perform spatial ranging operations if desired (e.g., using a radar scheme).

As shown in FIG. 3, wireless circuitry 16 may also include one or more antennas 38. Transceiver 40 may convey (e.g., transmit and/or receive) radio-frequency signals 24 using one or more antennas 38. Each antenna 38 may include one or more antenna conductors formed from conductive material such as metal. Antenna 38 may have a first antenna feed terminal 52 coupled to a first antenna conductor 42 (e.g., a positive or signal antenna feed terminal). Antenna 38 may also have a second antenna feed terminal 54 coupled to a second antenna conductor 44 (e.g., a ground or negative antenna feed terminal). Antenna conductors 42 and 44 may be formed from separate pieces of metal or other conductive materials or may, if desired, be formed from separate portions of the same integral piece of metal. If desired, antenna 38 may include additional antenna conductors that are not coupled to antenna feed terminals 52 and 54 (e.g., parasitic elements).

Antenna feed terminals 52 and 54 may collectively form an antenna feed for antenna 38. Each antenna feed and thus each antenna 38 in wireless circuitry 16 may be coupled to one or more transceivers 40 in wireless circuitry 16 over a corresponding radio-frequency transmission line 46. Radio-frequency transmission line 46 may include a signal conductor such as signal conductor 48 (e.g., a positive signal conductor) and a ground conductor such as ground conductor 50. Ground conductor 50 may be coupled to antenna feed terminal 54 of antenna 38. Signal conductor 48 may be coupled to antenna feed terminal 52 of antenna 38. Radio-frequency transmission line 46 may include a stripline, microstrip, coaxial cable, coaxial probes, edge-coupled microstrip, edge-coupled stripline, waveguide, combinations of these, etc.
If desired, filter circuitry, tuning components, switching circuitry, impedance matching circuitry, phase shifter circuitry, amplifier circuitry, and/or other circuitry may be disposed on radio-frequency transmission line 46 and/or may be coupled between two or more of the antenna conductors in antenna 38.

During transmission of radio-frequency signals 24, transceiver 40 transmits radio-frequency signals 24 (e.g., as modulated using wireless data) over radio-frequency transmission line 46. The radio-frequency signals may excite antenna currents to flow around the edges of antenna conductors 42 and 44 (via antenna feed terminals 52 and 54). The antenna currents may radiate radio-frequency signals 24 into free space (e.g., based at least on a resonance established by the radiating length of antenna conductor 42 and/or antenna conductor 44). During the reception of radio-frequency signals 24, incident radio-frequency signals 24 may excite antenna currents to flow around the edges of antenna conductors 42 and 44. The antenna currents may pass radio-frequency signals 24 to transceiver 40 over radio-frequency transmission line 46. Transceiver 40 may downconvert the radio-frequency signals to baseband and may demodulate wireless data from the signals.

Antenna conductors 42 and 44 may form different portions of antenna 38 depending on the architecture of antenna 38 (e.g., depending on the type of antenna structures used to implement antenna 38). For example, in some implementations, antenna conductor 42 may form an antenna resonating element (sometimes referred to herein as an antenna radiating element, an antenna resonator, an antenna radiator, or an antenna arm) whereas antenna conductor 44 forms an antenna ground (sometimes referred to herein as a ground plane or simply as ground) for antenna 38. In general, antenna conductors 42 and 44 need to be separated by a gap G at or near antenna feed terminals 52 and 54 (e.g., to prevent current from shorting between the antenna feed terminals without passing around the edges of the antenna conductors).

FIG. 4 is a diagram showing one example in which antenna conductor 42 forms an antenna arm and antenna conductor 44 forms an antenna ground for antenna 38. As shown in FIG. 4, antenna conductor 42 may have an elongated arm shape extending away from antenna conductor 44. Antenna conductor 42 may form a monopole antenna resonating element having antenna feed terminal 52 at one end and an opposing second end that extends away from the first end along the longitudinal axis of antenna conductor 42. The length of antenna conductor 42 may determine the resonant frequency of antenna 38. Antenna conductor 42 and antenna feed terminal 52 are separated from antenna conductor 44 and antenna feed terminal 54 by gap G. Antenna conductor 44 forms a ground plane for antenna conductor 42. The example of FIG. 4 is merely illustrative and, in general, antenna conductor 42 may have other shapes and/or orientations (e.g., antenna conductor 42 may follow a meandering path or any desired path having any desired number of curved and/or straight segments).

In the example of FIG. 4, antenna 38 is implemented as a monopole antenna. In other implementations, antenna 38 may be a dipole antenna. FIG. 5 is a diagram showing one example of how antenna 38 may be implemented as a dipole antenna. As shown in FIG. 5, antenna conductors 42 and 44 may form dipole resonating element arms (e.g., antenna arms) for antenna 38, extending in opposing directions away from antenna feed terminals 52 and 54. The lengths of antenna conductors 42 and 44 may determine the resonant frequency of antenna 38. Antenna conductors 42 and 44 may be separated from each other by gap G.

In other examples, antenna 38 may be implemented as a loop antenna. When implemented as a loop antenna, the tip of antenna conductor 44 of FIG. 5 may be connected to the tip of antenna conductor 42 such that a single conductive path in a loop shape extends from antenna feed terminal 52 to antenna feed terminal 54. These examples are merely illustrative and, in general, antenna 38 may include antennas with resonating elements that are formed from stacked patch antenna structures, loop antenna structures, patch antenna structures, inverted-F antenna structures, slot antenna structures, planar inverted-F antenna structures, waveguide structures, monopole antenna structures, dipole antenna structures, helical antenna structures, Yagi (Yagi-Uda) antenna structures, hybrids of these designs, etc. If desired, one or more of antennas 38 may be cavity-backed antennas.

If desired, antenna 38 may be indirectly fed. In these arrangements, antenna 38 may include additional antenna conductors (e.g., antenna resonating elements) that are excited to radiate and to receive signals using antenna conductors 42 and 44 (e.g., via a nearfield electromagnetic coupling such as a capacitive and/or inductive coupling between antenna conductors 42 and 44 and the antenna resonating elements).

If desired, conductive material in housing structures 12 may be used to form antenna conductors 42 and/or 44 for one or more antennas 38 in device 10 (e.g., for covering one or more frequency bands). The conductive material may include metal from the conductive frame in housing structures 12. The conductive frame may include multiple segments extending through both front housing 12-2 and temples 12-1 (FIG. 2). The segments may be separated (divided) by dielectric filled gaps at one or more locations.

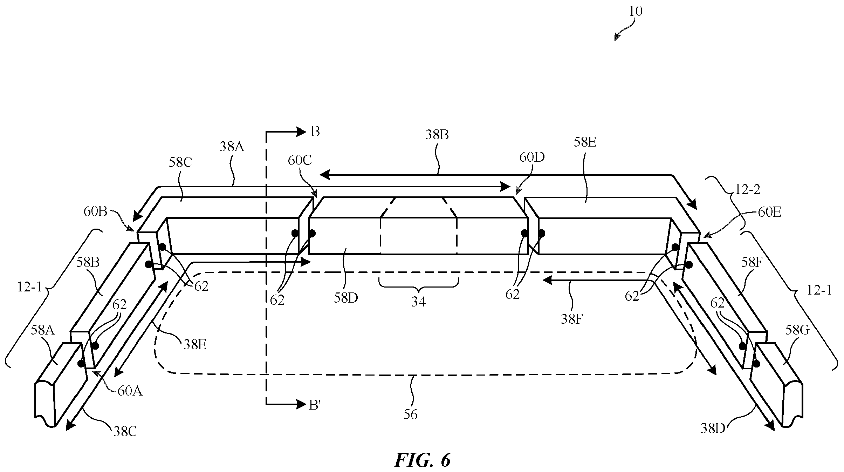

FIG. 6 is a rear perspective view (e.g., as taken in the direction of arrow A1 of FIG. 2) showing how the conductive frame in housing structures 12 may be used to form one or more antennas 38. As shown in FIG. 6, the housing structures 12 in device 10 may include a conductive frame 58 (extending through both front housing 12-2 and temples 12-1) having two or more segments separated (divided) by one or more gaps 60.

For example, conductive frame 58 may have a first segment 58A separated from a second segment 58B in the left temple 12-1 of device 10 by a first gap 60A. Conductive frame 58 may have a third segment 58C in front housing 12-2 that is separated from segment 58B in left temple 12-1 by a second gap 60B (e.g., at the hinge used to couple the left temple to the left edge of front housing 12-2). Conductive frame 58 may have a fourth segment 58D in front housing 12-2 (e.g., at and including nose bridge portion 34) that is separated from segment 58C by a third gap 60C. Conductive frame 58 may have a fifth segment 58E in front housing 12-2 that is separated from segment 58D by a fourth gap 60D. Conductive frame 58 may have a sixth segment 58F in the right temple 12-1 of device 10 that is separated from segment 58E by a fifth gap 60E. Conductive frame 58 may have a seventh segment 58G in right temple 12-1 that is separated from segment 58F by a sixth gap 60F.

When device 10 is being worn by a user, the lenses of device 10 (e.g., waveguides 32 of FIG. 2) may lie within region 56. The lenses may be mounted to at least segments 58C, 58D, and 58E, which may lie on or over the user's brow and nose while extending across the width of the user's face (e.g., the top edge of waveguides 32 may be mounted or affixed to segments 58C, 58D, and/or 58E). Segments 58A and 58B may rest on the user's left ear while extending back along the left side of the user's head. Segments 58F and 58G may rest on the user's right ear while extending back along the right side of the user's head.

The example of FIG. 6 is merely illustrative. Segments 58A-G may have other shapes and may follow other paths. If desired, left temple 12-1 may include more than two segments of conductive frame 58 or may include only a single segment (e.g., gap 60A may be omitted). If desired, right temple 12-1 may include more than two segments of conductive frame 58 or may include only a single segment (e.g., gap 60F may be omitted). If desired, front housing 12-2 may include more than three segments of conductive frame 58, may include two segments of conductive frame 58 (e.g., gap 60C or gap 60D may be omitted), or may include only a single segment of conductive frame 58 (e.g., gaps 60C and 60D may be omitted). Each gap 60 may divide conductive frame 58 into two corresponding segments and may electrically separate the segments from each other. Each gap 60 may be filled with dielectric material such as air, plastic, foam, ceramic, glass, polymer, adhesive, etc.

Any combination of any desired segments 58A-F from conductive frame 58 may be used to form the antenna conductor 42, the antenna conductor 44 of one or more antennas 38, and/or an isolation element between two or more antennas. For example, any of gaps 60A-60F of FIG. 6 may be used to form gap G (FIGS. 4 and 5) for a corresponding antenna 38. Antenna feed terminals 62 (e.g., either of antenna feed terminals 52 or 54 of FIG. 3) may be coupled to the segments of conductive frame 58 on opposing sides of the gap to feed the corresponding antenna. If desired, antenna tuning components, impedance matching circuitry, or other components may be coupled across any of the gaps 60 in conductive frame 58.

As one example, segment 58A may form the antenna conductor 42 (FIG. 3) and segment 58B may form antenna conductor 44 (FIG. 3) for a corresponding antenna 38C fed using a first antenna feed terminal 62 (e.g., antenna feed terminal 52 of FIG. 3) coupled to segment 58A at a first side of gap 60A and a second antenna feed terminal 62 (e.g., antenna feed terminal 54 of FIG. 3) coupled to segment 58B at a second side of gap 60A. In this example, segment 58A may form a monopole resonating element arm (FIG. 4) for antenna 38C (e.g., a monopole antenna) whereas at least segment 58B forms an antenna ground (FIG. 4) for antenna 38C. Alternatively, by flipping the antenna feed terminals, segment 58B may form a monopole resonating element arm (FIG. 4) for antenna 38C whereas at least segment 58A forms an antenna ground (FIG. 4) for antenna 38C. Alternatively, segments 58A and 58B may form dipole antenna resonating element arms (FIG. 5) for antenna 38C (e.g., a dipole antenna). Antenna 38C may be integrated entirely within left temple 12-1 of device 10, for example.

If desired, antenna 38C (e.g., the resonating length or volume of antenna 38C) may be extended to include additional segments of conductive frame 58. For example, gap 60B may be omitted to extend the antenna conductor 44 (e.g., the antenna ground) or the antenna conductor 42 (e.g., the antenna resonating element) for antenna 38C to also include segment 58C, gaps 60B and 60C may be omitted to extend the antenna conductor 44 or the antenna conductor 42 for antenna 38C to also include segments 58C and 58D, gap 60D may be additionally omitted to further extend the antenna conductor 44 or the antenna conductor 42 for antenna 38C to also include segment 58E, gap 60E may additionally be omitted to further extend the antenna conductor 44 or the antenna conductor 42 for antenna 38C to also include segment 58F, and/or gap 60F may be additionally omitted to further extend the antenna conductor 44 or the antenna conductor 42 for antenna 38C to also include segment 58G.

Additionally or alternatively, segment 58B may form the antenna conductor 42 (FIG. 3) and segment 58C may form antenna conductor 44 (FIG. 3) for a corresponding antenna 38E fed using a first antenna feed terminal 62 (e.g., antenna feed terminal 52 of FIG. 3) coupled to segment 58B at a first side of gap 60B and a second antenna feed terminal 62 (e.g., antenna feed terminal 54 of FIG. 3) coupled to segment 58C at a second side of gap 60B (e.g., device 10 may concurrently include antenna 38E and/or antenna 38C). In this example, antenna 38E may be distributed between left temple 12-1 and segment 58C in front housing 12-2 (across the hinge coupling the left temple to the front housing in the corner of device 10). Segment 58B may form a monopole resonating element arm (FIG. 4) for antenna 38E (e.g., a monopole antenna) whereas at least segment 58C forms an antenna ground (FIG. 4) for antenna 38E. Alternatively, by flipping the antenna feed terminals, segment 58C may form a monopole resonating element arm (FIG. 4) for antenna 38E whereas at least segment 58B forms an antenna ground (FIG. 4) for antenna 38E. Alternatively, segments 58B and 58C may form dipole antenna resonating element arms (FIG. 5) for antenna 38E (e.g., a dipole antenna distributed between left temple 12-1 and front housing 12-2).

If desired, antenna 38E (e.g., the resonating length or volume of antenna 38E) may be extended to include additional segments of conductive frame 58. For example, gap 60A may be omitted to extend the antenna conductor 44 (e.g., the antenna ground) or the antenna conductor 42 (e.g., the antenna resonating element) for antenna 38E to also include segment 58A. Additionally or alternatively, if desired, gap 60C may be omitted to extend the antenna conductor 44 or the antenna conductor 42 for antenna 38E to also include segment 58D, gaps 60C and 60D may be omitted to extend the antenna conductor 44 or the antenna conductor 42 for antenna 38E to also include segments 58D and 58E, gap 60E may be additionally omitted to further extend the antenna conductor 44 or the antenna conductor 42 for antenna 38E to also include segment 58F, and/or gap 60F may additionally be omitted to further extend the antenna conductor 44 or the antenna conductor 42 for antenna 38E to also include segment 58G.

Additionally or alternatively, segment 58C may form the antenna conductor 42 (FIG. 3) and segment 58B may form antenna conductor 44 (FIG. 3) for a corresponding antenna 38A fed using a first antenna feed terminal 62 (e.g., antenna feed terminal 52 of FIG. 3) coupled to segment 58C at a first side of gap 60C and a second antenna feed terminal 62 (e.g., antenna feed terminal 54 of FIG. 3) coupled to segment 58D at a second side of gap 60C (e.g., device 10 may concurrently include antenna 38E, antenna 38C, and/or antenna 38A). In this example, segment 58C may form a monopole resonating element arm (FIG. 4) for antenna 38A (e.g., a monopole antenna) whereas at least segment 58D forms an antenna ground (FIG. 4) for antenna 38A. Alternatively, by flipping the antenna feed terminals, segment 58D may form a monopole resonating element arm (FIG. 4) for antenna 38A whereas at least segment 58C forms an antenna ground (FIG. 4) for antenna 38A. Alternatively, segments 58C and 58D may form dipole antenna resonating element arms (FIG. 5) for antenna 38A (e.g., a dipole antenna). Antenna 38A may be integrated entirely within front housing 12-2 of device 10, for example.

If desired, antenna 38A (e.g., the resonating length or volume of antenna 38A) may be extended to include additional segments of conductive frame 58. For example, gap 60B may be omitted to extend the antenna conductor 44 (e.g., the antenna ground) or the antenna conductor 42 (e.g., the antenna resonating element) for antenna 38A to also include segment 58B, gap 60A may be additionally omitted to further extend the antenna conductor 44 or the antenna conductor 42 for antenna 38A to also include segment 58A, etc. Additionally or alternatively, if desired, gap 60D may be omitted to extend the antenna conductor 44 or the antenna conductor 42 for antenna 38A to also include segment 58E, gap 60E may be additionally omitted to further extend the antenna conductor 44 or the antenna conductor 42 for antenna 38A to also include segment 58F, and/or gap 60F may additionally be omitted to further extend the antenna conductor 44 or the antenna conductor 42 for antenna 38A to also include segment 58G.

Additionally or alternatively, segment 58D may form the antenna conductor 42 (FIG. 3) and segment 58B may form antenna conductor 44 (FIG. 3) for a corresponding antenna 38B fed using a first antenna feed terminal 62 (e.g., antenna feed terminal 52 of FIG. 3) coupled to segment 58D at a first side of gap 60D and a second antenna feed terminal 62 (e.g., antenna feed terminal 54 of FIG. 3) coupled to segment 58E at a second side of gap 60D (e.g., device 10 may concurrently include antenna 38E, antenna 38C, antenna 38A, and/or antenna 38B). In this example, segment 58D may form a monopole resonating element arm (FIG. 4) for antenna 38B (e.g., a monopole antenna) whereas at least segment 58E forms an antenna ground (FIG. 4) for antenna 38B. Alternatively, by flipping the antenna feed terminals, segment 58E may form a monopole resonating element arm (FIG. 4) for antenna 38B whereas at least segment 58D forms an antenna ground (FIG. 4) for antenna 38B. Alternatively, segments 58D and 58E may form dipole antenna resonating element arms (FIG. 5) for antenna 38B (e.g., a dipole antenna). Antenna 38B may be integrated entirely within front housing 12-2 of device 10, for example.

If desired, antenna 38B (e.g., the resonating length or volume of antenna 38B) may be extended to include additional segments of conductive frame 58. For example, gap 60C may be omitted to extend the antenna conductor 44 (e.g., the antenna ground) or the antenna conductor 42 (e.g., the antenna resonating element) for antenna 38B to also include segment 58C, gap 60B may be additionally omitted to further extend the antenna conductor 44 or the antenna conductor 42 for antenna 38B to also include segment 58B, gap 60A may be additionally omitted to further extend the antenna conductor 44 or the antenna conductor 42 for antenna 38B to also include segment 58A, etc. Additionally or alternatively, if desired, gap 60E may be omitted to extend the antenna conductor 44 or the antenna conductor 42 for antenna 38B to also include segment 58E, gap 60F may additionally be omitted to further extend the antenna conductor 44 or the antenna conductor 42 for antenna 38B to also include segment 58G, etc.

Additionally or alternatively, segment 58E may form the antenna conductor 42 (FIG. 3) and segment 58B may form antenna conductor 44 (FIG. 3) for a corresponding antenna 38F fed using a first antenna feed terminal 62 (e.g., antenna feed terminal 52 of FIG. 3) coupled to segment 58E at a first side of gap 60E and a second antenna feed terminal 62 (e.g., antenna feed terminal 54 of FIG. 3) coupled to segment 58F at a second side of gap 60E (e.g., device 10 may concurrently include antenna 38E, antenna 38C, antenna 38A, antenna 38B, and/or antenna 38F). In this example, segment 58E may form a monopole resonating element arm (FIG. 4) for antenna 38F (e.g., a monopole antenna) whereas at least segment 58F forms an antenna ground (FIG. 4) for antenna 38F. Alternatively, by flipping the antenna feed terminals, segment 58F may form a monopole resonating element arm (FIG. 4) for antenna 38F whereas at least segment 58E forms an antenna ground (FIG. 4) for antenna 38F. Alternatively, segments 58E and 58F may form dipole antenna resonating element arms (FIG. 5) for antenna 38F (e.g., a dipole antenna). In this way, antenna 38F may be distributed (split) between front housing 12-2 and the right temple 12-1 of device 10 (e.g., at the corner of device 10).

If desired, antenna 38F (e.g., the resonating length or volume of antenna 38F) may be extended to include additional segments of conductive frame 58. For example, gap 60D may be omitted to extend the antenna conductor 44 (e.g., the antenna ground) or the antenna conductor 42 (e.g., the antenna resonating element) for antenna 38F to also include segment 58D, gap 60C may be additionally omitted to further extend the antenna conductor 44 or the antenna conductor 42 for antenna 38F to also include segment 58C, gap 60B may be additionally omitted to further extend the antenna conductor 44 or the antenna conductor 42 for antenna 38F to also include segment 58B, gap 60A may be additionally omitted to further extend the antenna conductor 44 or the antenna conductor 42 for antenna 38F to also include segment 58A, etc. Additionally or alternatively, if desired, gap 60F may be omitted to extend the antenna conductor 44 or the antenna conductor 42 for antenna 38F to also include segment 58G.

Additionally or alternatively, segment 58F may form the antenna conductor 42 (FIG. 3) and segment 58B may form antenna conductor 44 (FIG. 3) for a corresponding antenna 38D fed using a first antenna feed terminal 62 (e.g., antenna feed terminal 52 of FIG. 3) coupled to segment 58F at a first side of gap 60F and a second antenna feed terminal 62 (e.g., antenna feed terminal 54 of FIG. 3) coupled to segment 58G at a second side of gap 60F (e.g., device 10 may concurrently include antenna 38E, antenna 38C, antenna 38A, antenna 38B, antenna 38F, and/or antenna 38D). In this example, segment 58F may form a monopole resonating element arm (FIG. 4) for antenna 38D (e.g., a monopole antenna) whereas at least segment 58G forms an antenna ground (FIG. 4) for antenna 38D. Alternatively, by flipping the antenna feed terminals, segment 58G may form a monopole resonating element arm (FIG. 4) for antenna 38D whereas at least segment 58F forms an antenna ground (FIG. 4) for antenna 38D. Alternatively, segments 58F and 58G may form dipole antenna resonating element arms (FIG. 5) for antenna 38D (e.g., a dipole antenna). Antenna 38D may, for example, be integrated entirely within the right temple 12-1 of device 10.

If desired, antenna 38D (e.g., the resonating length or volume of antenna 38D) may be extended to include additional segments of conductive frame 58. For example, gap 60E may be omitted to extend the antenna conductor 44 (e.g., the antenna ground) or the antenna conductor 42 (e.g., the antenna resonating element) for antenna 38D to also include segment 58E, gap 60D may be additionally omitted to further extend the antenna conductor 44 or the antenna conductor 42 for antenna 38D to also include segment 58D, gap 60C may be additionally omitted to further extend the antenna conductor 44 or the antenna conductor 42 for antenna 38D to also include segment 58C, gap 60B may be additionally omitted to further extend the antenna conductor 44 or the antenna conductor 42 for antenna 38D to also include segment 58B, gap 60A may be additionally omitted to further extend the antenna conductor 44 or the antenna conductor 42 for antenna 38D to also include segment 58A, etc.

In this way, conductive frame 58 may be configured to accommodate as many as six different antennas 38 around the periphery of the user's head. Each antenna may cover one or more different respective frequency bands or, if desired, two or more of the antennas may cover the same frequency band(s). This may allow device 10 to provide more uniform coverage within a complete sphere around device 10 (e.g., despite the presence of the user's head), may allow device 10 to implement antenna diversity and/or MIMO schemes, and may allow for antennas 38 to have as much volume and thus as large a bandwidth as possible at relatively low frequencies (e.g., frequencies including the cellular low band and GPS frequencies). In addition, when a user is wearing device 10, front housing 12-2 generally sits relatively far away from the user's skin. This may allow antennas 38A and 38B to transmit radio-frequency signals with relatively high transmit power levels without violating regulatory limits on radio-frequency absorption/exposure.

Some or all of conductive frame 58 may be located at the exterior of device 10 or, if desired, some or all of conductive frame 58 may be covered with dielectric housing structures that form the exterior of device 10 (e.g., some or all of conductive frame 58 such as segments 58A, 58B, 58F, and 58G) may be internal conductive members that are housed within the dielectric housing structures. The dielectric housing structures may help to shield conductive frame 58 from touching that could otherwise detune one or more of the antennas, may help to shield components in device 10 from damage, may contribute to the cosmetic or aesthetic appearance of device 10, etc. If desired, conductive frame 58 may be formed from sheet metal, conductive traces, metal foil, or other metal members that are embedded within, layered onto, adhered to, attached to, or otherwise housed within or on the dielectric housing structures.

Portions of conductive frame 58 within temples 12-1 and/or the dielectric housing structures may include cavities and projectors 28 for displays 18 (FIG. 2) may be mounted within the cavities. If desired, one or more gaps 60 may be present in the conductive frame without antenna feed terminals 62 coupled to the corresponding segments of conductive frame 58 at the gap. While antenna feed terminals 62 are shown in FIG. 6 as being coupled to segments of conductive frame 58 at or adjacent to a corresponding gap 60, feed terminals 62 may be disposed at other locations along the segments of conductive frame 58. Radio-frequency transmission lines 46 (FIG. 3) may be coupled to antenna feed terminals 62 and may, for example, run along conductive frame 58C to transceiver 40 (FIG. 3). If desired, one or more of the antennas may be indirectly fed (e.g., where feed probes or conductors indirectly feed one or more segments of conductive frame 58 using near-field electromagnetic coupling) or may be fed using other feeding schemes.

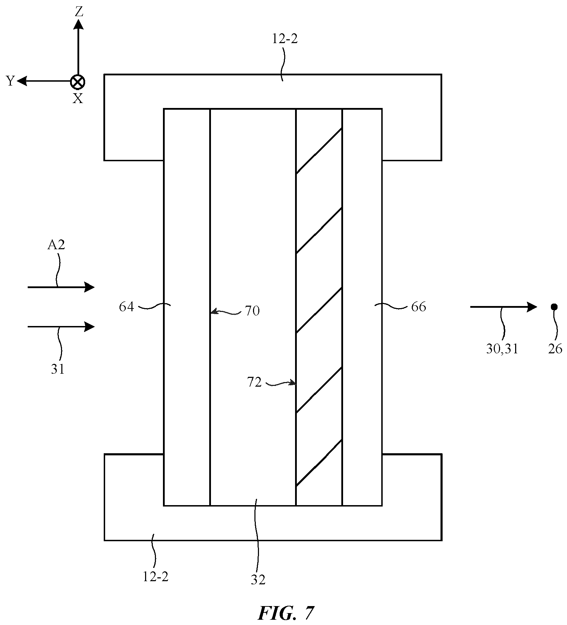

If desired, device 10 may include one or more antennas integrated into the lenses within region 56 of FIG. 6. FIG. 7 is a cross-sectional side view (e.g., as taken along line BB' of FIGS. 2 and 6) showing one example of how an antenna 38 may be integrated into the left lens of device 10 (e.g., within region 56 of FIG. 6).

As shown in FIG. 7, waveguide 32 may be mounted to front housing 12-2. Front housing 12-2 may extend along the lateral periphery (e.g., one or more edges) of waveguide 32 (e.g., within the X-Z plane). While front housing 12-2 is shown in FIG. 7 as extending along both the top and bottom lateral edges of waveguide 32, front housing 12-2 may extend along only the top side of waveguide 32 if desired (e.g., the top lateral edge of waveguide 32 may be attached to front housing 12-2). Front housing 12-2 of FIG. 7 may include one or more segments of conductive frame 58 (e.g., segment 58C and/or 58D of FIG. 6) and, if desired, may include one or more dielectric housing members disposed over or around the conductive frame.

Waveguide 32 may form part of an optical lens that passes world light 31 from the exterior of device 10 towards the eye box at or around point 26. The optical lens (sometimes referred to herein as an optical stack) may also include first optics 64 and second optics 66 mounted to front housing 12-2. Optics 64 may be mounted at or facing lateral surface 70 of waveguide 32. Optics 64 may contact lateral surface 70 or may be separated from lateral surface 70 by an air gap. Second optics 66 may be mounted at or facing lateral surface 72 of waveguide 32. The optical stack may also include a conductive ring 68 mounted to front housing 12-2. Conductive ring 68 may be interposed between waveguide 32 and optics 66.

When displaying images to the user, projector 28 (FIG. 2) may generate image light 30, which is passed to waveguide 32. Waveguide 32 may propagate image light 30 via TIR (e.g., in the +X direction). An output coupler on waveguide 32 (not shown) may couple image light 30 out of waveguide 32 (through lateral surface 72, the opening in conductive ring 68, and optics 66) and towards the eye box. At the same time, waveguide 32 may transmit world light 31 (from lateral surface 72) towards the eye box overlapping image light 30 (e.g., without diffracting or redirecting the world light).

Optics 64 and 66 may each include one or more transparent cover layers (e.g., to help protect waveguide 32 from damage), one or more lens elements, one or more additional waveguides, optics for use in performing gaze tracking, and/or any other desired optical components. As one example, optics 66 may include a first bias lens for applying a first optical power to virtual objects in image light 30 that serve to place the virtual objects at a desired effective (virtual) distance from the eye box. Optics 64 may include a second bias lens having a second optical power that reverses, for world light 31, the first optical power applied to world light 31 by the first bias lens in passing to the eye box.

Conductive ring 68 may extend along the lateral periphery of waveguide 32 without blocking the lateral surface of waveguide 32 from passing image light 30 and world light 31 to the eye box. Conductive ring 68 may help to ensure a robust and constant air gap between lateral surface 68 and optics 66 and/or may help to increase the mechanical integrity and rigidity of the optical stack, for example. If desired, conductive ring 68 may be disposed between lateral surface 70 and optics 64 instead of between lateral surface 72 and optics 66. If desired, a first conductive ring 68 may be disposed between waveguide 32 and optics 66 whereas a second conductive ring 68 is disposed between waveguide 32 and optics 64. Each conductive ring 68 may be formed from metal. If desired, one or more of the conductive rings 68 may be used to form one or more antennas 38 for device 10.

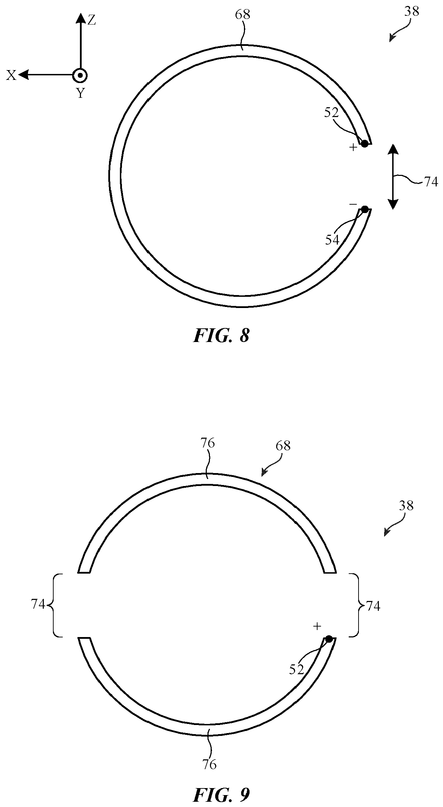

FIG. 8 is a front view (e.g., as taken in the direction of arrow A2 of FIG. 7) showing one example of how conductive ring 68 may be used to form an antenna 38 for device 10. In the example of FIG. 8, waveguide 32, optics 64, optics 66, and front housing 12-2 have been omitted for the sake of clarity.

As shown in FIG. 8, conductive ring 68 may extend along a loop-shaped path around a central opening (e.g., within the X-Z plane and around the Y-axis). The central opening may overlap the output coupler on waveguide 32 and the corresponding eye box. The loop-shaped path may extend from a first end to a second end. The first end may be separated from the second end by gap 74. Antenna feed terminals 52 and 54 may be coupled to the first and second ends, respectively, across gap 74. In this way, conductive ring 68 may form a loop antenna resonating element for antenna 38 (e.g., where antenna conductor 44 of FIG. 3 is formed from the portion of conductive ring 68 at antenna feed terminal 54 and antenna conductor 42 of FIG. 3 is formed from the portion of conductive ring 68 at antenna feed terminal 52).

If desired, conductive ring 68 may be divided by more than one gap 74, as shown in the example of FIG. 9. As shown in FIG. 9, conductive ring 68 may include two segments 76 separated by two gaps 74. Antenna feed terminal 52 may be coupled to one of the segments 76. Antenna feed terminal 54 (not shown in FIG. 9) may be coupled to the other segment 76 to configure antenna 38 to form a monopole antenna (e.g., where the segment 76 coupled to antenna feed terminal 52 forms a monopole antenna resonating element arm) or a dipole antenna (e.g., where both segments form dipole antenna resonating element arms). If desired, multiple antennas 38 may be integrated into a single conductive ring 68 (e.g., more than two gaps 74 may be disposed in conductive ring 68). An unfed segment of conductive ring 68 may form an isolation element between two or more antennas if desired. The conductive ring 68 for the left and/or right waveguide 32 and eye box may include zero antennas, one antenna 38, or more than one antenna 38. Conductive ring 68 need not have a circular shape and may, in general, have a shape that follows the lateral outline of the corresponding waveguide 32 (e.g., a rectangular shape, an elliptical shape, a shape having any desired number of curved and/or straight segments, etc.).

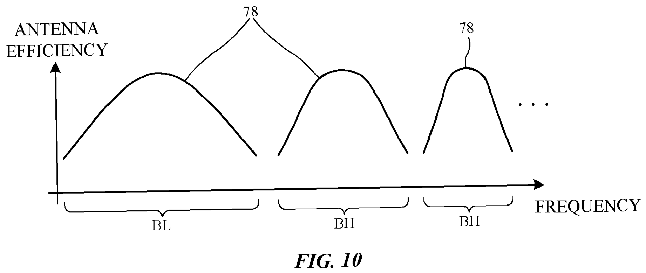

The antenna(s) 38 in conductive frame 58 (FIG. 7) and/or the antenna(s) 38 in conductive ring 68 may collectively allow wireless circuitry 16 to cover any desired number of frequency bands with sufficient bandwidth despite the small form factor of device 10. FIG. 10 is a diagram plotting the collective antenna efficiency of the antennas 38 in device 10. As shown by curves 78, antennas 38 may collectively cover a relatively low frequency band BL (e.g., including the cellular low band and GPS/GNSS bands) and one or more relatively high frequency bands BH at higher frequencies. In general, wireless circuitry 16 may cover any desired number of bands at any desired frequencies.

In accordance with an aspect of the invention, a head-mounted device is provided that includes a conductive frame having a first segment and a second segment separated from the first segment by a gap, the second segment being configured to rotate with respect to the first segment, a projector coupled to the first segment and configured to generate light, a waveguide coupled to the second segment and configured to direct the light to an eye box, and an antenna having a first antenna feed terminal coupled to the first segment at a first side of the gap and having a second antenna feed terminal coupled to the second segment at a second side of the gap.

Preferably, the first segment includes a monopole antenna resonating element for the antenna and the second segment includes an antenna ground for the antenna.

Preferably, the second segment includes a monopole antenna resonating element arm for the antenna and the first segment includes an antenna ground for the antenna.

Preferably, the first segment includes a first dipole antenna resonating element arm for the antenna and the second segment includes a second dipole antenna resonating element arm for the antenna.

Preferably, the conductive frame includes a third segment separated from the first segment by an additional gap, including an additional antenna having a third antenna feed terminal coupled to the first segment and having a fourth antenna feed terminal coupled to the third segment.

Preferably, the conductive frame includes a third segment separated from the second segment by an additional gap, including an additional antenna having a third antenna feed terminal coupled to the second segment and having a fourth antenna feed terminal coupled to the third segment, the third segment includes a nose bridge for the head-mounted device.

Preferably, the waveguide is configured to transmit world light to the eye box.

Preferably, the head-mounted device includes a housing having a left temple that includes the first segment of the conductive frame and having a right temple opposite the left temple.

Preferably, the left temple includes dielectric overlapping the first segment and the projector.

Preferably, the head-mounted device includes a conductive ring that extends along a lateral periphery of the waveguide, an additional gap in the conductive ring, and an additional antenna having a third antenna feed terminal coupled to the conductive ring at a first side of the gap and having a fourth antenna feed terminal coupled to the conductive ring at a second side of the gap.

In accordance with an aspect of the invention, a pair of glasses is provided that includes a frame, a waveguide mounted to the frame and aligned with an eye box, a projector configured to emit light, the waveguide being configured to direct the light to the eye box, first optics mounted to the frame and aligned with the eye box, second optics mounted to the frame and aligned with the eye box, the waveguide being interposed between the first optics and the second optics, a conductive ring mounted to the frame and interposed between the second optics and the waveguide, and an antenna formed from the conductive ring.

Preferably, the conductive ring extends along a lateral periphery of the waveguide and has a gap, the antenna having a first antenna feed terminal coupled to the conductive ring at a first side of the gap and a second antenna feed terminal coupled to the conductive ring at a second side of the gap.

Preferably, the conductive ring extends along a lateral periphery of the waveguide and has first and second gaps that divide the conductive ring into at least first and second segments, the antenna having an antenna feed terminal coupled to the first segment of the conductive ring.

Preferably, the first segment includes a monopole antenna resonating element for the antenna.

Preferably, the antenna has an additional antenna feed terminal coupled to the second segment of the conductive ring, the first segment includes a first dipole antenna resonating element for the antenna, and the second segment includes a second dipole antenna resonating element for the antenna.

Preferably, the waveguide is configured to direct the light to the eye box through the second optics.

Preferably, the waveguide is configured to direct the light to the eye box through the first optics.

Preferably, the first optics include a first bias lens and the second optics include a second bias lens.

Preferably, the first optics include a first transparent cover layer for the waveguide and the second optics include a second transparent cover layer for the waveguide.

In accordance with an aspect of the invention, a head-mounted device is provided that includes a housing having a first portion, a second portion coupled to a first end of the first portion, and a third portion coupled to a second end of the first portion, the second portion being configured to rotate relative to the first portion and the third portion being configured to rotate relative to the first portion, a waveguide having an edge mounted to the first portion of the housing, the waveguide has a first lateral surface and a second lateral surface opposite the first lateral surface, a transparent layer mounted to the frame and overlapping the waveguide, a projector configured to emit light into the waveguide, the waveguide is configured to output the light through the second lateral surface, and an antenna arm that extends along the first lateral surface between the transparent layer and the waveguide.

The foregoing is merely illustrative and various modifications can be made by those skilled in the art without departing from the scope of the described embodiments. The foregoing embodiments may be implemented individually or in any combination.

## Claims

1. A head-mounted device, comprising:
a conductive frame having a first segment and a second segment separated from the first segment by a gap, the second segment being configured to rotate with respect to the first segment;
a projector coupled to the first segment and configured to generate light;
a waveguide coupled to the second segment and configured to direct the light to an eye box; and
an antenna having a first antenna feed terminal coupled to the first segment at a first side of the gap and having a second antenna feed terminal coupled to the second segment at a second side of the gap.

2. The head-mounted device of claim 1, wherein the first segment comprises a monopole antenna resonating element for the antenna and the second segment comprises an antenna ground for the antenna.

3. The head-mounted device of claim 1, wherein the second segment comprises a monopole antenna resonating element arm for the antenna and the first segment comprises an antenna ground for the antenna.

4. The head-mounted device of claim 1, wherein the first segment comprises a first dipole antenna resonating element arm for the antenna and the second segment comprises a second dipole antenna resonating element arm for the antenna.

5. The head-mounted device of any preceding claim, wherein the conductive frame comprises a third segment separated from the first segment by an additional gap, further comprising:
an additional antenna having a third antenna feed terminal coupled to the first segment and having a fourth antenna feed terminal coupled to the third segment.

6. The head-mounted device of any of claims 1 to 4, wherein the conductive frame comprises a third segment separated from the second segment by an additional gap, further comprising:
an additional antenna having a third antenna feed terminal coupled to the second segment and having a fourth antenna feed terminal coupled to the third segment, wherein the third segment comprises a nose bridge for the head-mounted device.

7. The head-mounted device of any of claims 1 to 4, further comprising:
a conductive ring that extends along a lateral periphery of the waveguide;
an additional gap in the conductive ring; and
an additional antenna having a third antenna feed terminal coupled to the conductive ring at a first side of the gap and having a fourth antenna feed terminal coupled to the conductive ring at a second side of the gap.

8. The head-mounted device of any preceding claim, wherein the waveguide is configured to transmit world light to the eye box.

9. The head-mounted device of any preceding claim, further comprising:
a housing having a left temple that includes the first segment of the conductive frame and having a right temple opposite the left temple.

10. The head-mounted device of claim 9, wherein the left temple comprises dielectric overlapping the first segment and the projector.
